# EUROPEAN PATENT SPECIFICATION

(11) **EP 2 842 684 B1**
(45) Date of publication and mention of the grant of the patent: **23.10.2019**
(21) Application number: 13181805.6
(22) Date of filing: 27.08.2013
(51) Int. Cl.: B23K 9/29, B23K 9/32

(54) **Welding torch system for use in welding or cutting operations, welding torch for use in such a welding torch system**
Schweißbrennersystem zur Verwendung bei Schweiß- oder Schneidoperationen, Schweißbrenner zur Verwendung in solch einem Schweißbrennersystem
Système de chalumeau de soudage destiné à être utilisé dans des opérations de soudage ou de découpage, chalumeau de soudage pour ledit système

(43) Date of publication of application: 04.03.2015
(73) Proprietor: Nederlandse Organisatie voor toegepast- natuurwetenschappelijk onderzoek TNO, 2595 DA 's-Gravenhage (NL)
(72) Inventor: Moons, Andreas Mattheus Maria, 2628 VK Delft (NL); Henquet, Ellemieke Mary-Rose, 2628 VK Delft (NL); Knoll, Bastiaan, 2628 VK Delft (NL)
(74) Representative: V.O.

(56) References cited:
- WO-A1-00/61327
- WO-A1-91/07249
- WO-A1-2007/106925
- DE-A1- 3 135 381
- GB-A- 2 466 254

## Description

The invention relates to a welding torch system for use in welding or cutting operations during which fume is created, said welding torch system including a welding torch comprising:
- a contact tip holder having formed therein a longitudinal passageway with a head end through which can be supplied welding wire having a free end forming a contact tip;
- a coaxial nozzle comprising an inner shield gas conduit having a shield gas outlet for supplying a shield gas, said inner shield gas conduit surrounding said contact tip holder, an outer shell at least partly surrounding said inner shield gas conduit, said outer shell having a head end, wherein between an inner surface of said outer shell and an outer surface of said inner shield gas conduit a fume extracting passageway is formed and wherein a plurality of openings is provided in a distal end of the outer shell for extracting ambient air and fume into the coaxial nozzle;
said welding torch system further comprising:
- a shield gas generator and supply unit operatively connectable to the inner shield gas conduit for - during operation - supplying shield gas through the shield gas outlet; and
- a fume extracting assembly operatively connectable to the fume extracting passageway for - during operation - extracting fume and ambient air.

Such a welding torch system is for example known from WO-91/07249. This known welding torch system is constructed so as to extract fumes which are produced during electronic arc welding, and other welding methods as well, which fumes may be produced at appreciable volumes and may be potentially hazardous. In WO-91/07249 a nozzle structure for a fume extracting welding torch is described having a series of openings, generally in the form of transverse elongate slots, which for example can be in a surface of the nozzle tapering towards the downstream end of the torch. In a specific favorable embodiment of the known welding torch system the tapering portion is about 12.7 mm long and has a shield gas outlet with a diameter of about 22 mm. Four slots are provided in the tapering portion each extending for 4.8 mm inch in the longitudinal direction and for 14.6 mm in the transverse direction, with the upstream edge of slot being coincident with the commencement of the taper. Although this known welding torch system provides an improvement of the fume extraction, there still exists a need to further improve the fume extraction, preferably up to a level for which no protective gear for the welder is necessary during welding. A welding torch with the features listed above is disclosed also in document WO-A-2007106925.

It is an object of the invention to provide a welding torch system with which the fume extraction can be significantly improved while still providing the possibility of obtaining a correct weld.

In accordance with the invention this object is obtained by providing a welding torch system for use in welding or cutting operations during which fume is created, said welding torch system including a welding torch according to claim 11.

In an embodiment of a welding torch system according to the invention the increased outlet velocity of shield gas is obtained by accordingly operating and arranging the shield gas generator and supply unit.

In order to reduce costs for operating the welding torch system it is in an alternative embodiment of a welding torch system according to the invention advantageous when the inner shield gas conduit has an end portion having an inner surface of which the diameter decreases towards the shield gas outlet. In this manner the narrowing of the inner shield gas conduit towards the shield gas outlet provides the increased outlet velocity, so that the commonly used shield gas generator and supply unit nor the operation thereof need not be adapted. It is then in particular advantageous when the inner surface of the end portion is configured for - during operation - generating a substantially undisturbed flow of shield gas or preferably a substantially laminar flow. Such an undisturbed flow of shield gas does not give rise to turbulence which undisturbed flow can promote the extraction of fumes while obtaining a correct weld. Preferably the inner surface of the end portion then decreases gradually. In particular it can be useful that the inner surface is free of ridges, grooves or steps in order to prevent sudden pressure drops. In case the end portion of the inner shield gas conduit has a length of at least 25 mm it is possible to obtain an undisturbed flow of shield gas as well as an increased outlet velocity in a range of preferably 3.0 to 3.8 m/s in an constructional simple manner.

In a further embodiment of a welding torch system according to the invention the end portion of the inner shield gas conduit is conical, preferably having a uniform wall thickness as a result of which the outer surface of the inner shield gas conduit is also conical, which makes it possible to construct the coaxial nozzle in an easy manner.

It appears that in case the shield gas outlet has a diameter between 8 and 12 mm, preferably a diameter of about 10 mm, in most cases the increased outlet velocity can be realized without making further adaptations to the welding torch system.

In order to prevent deterioration of the inner shield gas conduit due to the heat generated during welding, the wall thickness of the inner shield gas conduit is preferably dimensioned for - during operation - conducting heat generated during welding at an amount sufficient to prevent deterioration of the conical end portion, said wall thickness preferably being at least 1 mm, more preferred at least 1.5 mm.

In an advantageous embodiment of a welding torch system according to the invention the contact tip holder has a conical end portion having an outer surface with a diameter which decreases towards the head end. This aspect of the invention is based on the insight that by shaping the contact tip holder in this manner it can be possible to realize the increased outlet velocity of the shield gas in a constructionally easy manner. When the distance between the outer surface of the conical end portion of the contact tip holder and the inner surface of the conical end portion of the inner shield gas conduit is at least substantially uniform in longitudinal direction obtaining an undisturbed flow of shield gas can be relatively easy.

In a further embodiment of a welding torch system according to the invention the head end of the contact tip holder has a diameter of less than 5 mm, preferably a diameter of 4.0 mm, as a result of which deposition of contaminations on the free end surface of the contact tip holder can be prevented.

To realize a correct weld the distance in longitudinal direction between the head end of the contact tip holder and a plane defined by the shield gas outlet of the inner shield gas conduit is less than 5 mm, preferably less than 4 mm, most preferred about 3 mm.

In a still further embodiment of a welding torch system according to the invention the outer shell has an end portion having an inner surface with a diameter which decreases towards the head end of the end portion of the outer shell. Preferably the end portion of the outer shell is at least 25 mm long. In this manner the extraction of fumes can be promoted. Preferably, the distance between an outer surface of the end portion of the inner shield gas conduit and the inner surface of the end portion of the outer shell decreases towards the head end, which means that the rate at which the diameter of the inner surface of the outer shell decreases is greater than that the rate at which the outer surface of the inner shield gas conduit decreases in diameter. This in particular can promote the extraction of fumes, which is even further promoted when the end portion of the outer shell is conical, preferably having a uniform wall thickness. Preferably, the outer shell is also conical with a decreasing diameter towards the head end which - during use - provides a better sight on the material to be welded/cut.

From a point of construction of the welding torch of the welding torch system it is advantageous when the head end of the outer shell and the head end of the inner shield gas conduit are integral or when the outer shell and the inner shield gas conduit are formed by separate parts which are welded together at their head ends for forming an integral head end.

The plurality of openings in the distal end of the outer shell are formed by a number of longitudinally extending slots, each slot communicating with the fume extracting passageway, which slots are distributed evenly in circumferential direction of the outer shell. Since the slots extend in longitudinal direction the extraction of fumes can be realized in an effective manner, in particular when the slots have a length of at least 20, preferably at least 22 mm, most preferred a length of about 26 mm.

In a particularly advantageous embodiment of a welding torch system according to the invention the slots extend from the portion of the outer shell where the inner surface has the largest diameter up to an operating distance from the distal end of the head end of the outer shell. In this manner it can be realized that the extraction of fumes does not influence the outflow of shield gas exiting from the shield gas outlet so that the weld is correctly shielded. In particular the operating distance is chosen as small as possible while not disturbing the shield gas and is preferably at least 3 mm, preferably at least 4 mm, most preferred about 5 mm.

In an embodiment of a welding torch system according to the invention in which the effective passage area of all the slots is equal to or greater than the effective passage area of the fume extracting passageway, the fume extracting passageway does not form a restriction for the extracted fumes which can lead to an improved extraction of fumes.

In a specific embodiment of a welding torch system according to the invention the fume extracting assembly is arranged for - during operation - generating a flow of between 10 and 100 m³/h, preferably between 50 and 75 m³/h, most preferred a flow of about 55 m³/h. In this manner a good extraction of fumes can be realized without interfering with the flow of shield gas exiting the shield gas outlet. In particular, it has appeared that with a flow having a value above this range also shield gas exiting from the shield gas outlet is influenced and drawn backwards which could deteriorate the quality of the weld, while when the flow has a value below this range fumes are insufficiently extracted.

In an embodiment of a welding torch system according to the invention wherein the fume extracting assembly is arranged for - during operation - generating a flow with such a value and the operating distance is chosen such for - during operation - creating a circumferential lee zone around the distal end of the outer shell in which substantially no extraction force is exerted on the fume it is possible that the amount of fumes extracted is such that the protection for the welder can be minimal or even be dispensed with totally.

The invention further relates to a welding torch according to claim 11.

The outer shell of an embodiment of a welding torch according to the invention has an end portion having an inner surface with a diameter which decreases towards the head end of the distal end of the outer shell. In particular the distance between an outer surface of the end portion of the inner shield gas conduit and the inner surface of the end portion of the outer shell decreases towards the head end. Preferably, the end portion of the outer shell is conical, preferably having a uniform wall thickness. The head end of the outer shell and the head end of the inner shield gas conduit can be made integral or can be formed by separate parts which are welded together at their head ends for forming an integral head end. The outer shell is provided with a number of longitudinally extending slots, each slot communicating with the fume extracting passageway, which slots are distributed evenly in circumferential direction of the outer shell. The slots can in an advantageous embodiment extend from the portion of the outer shell where the inner surface has the largest diameter up to an operating distance from the distal end of the head end of the outer shell, wherein the operating distance is at least 3 mm, preferably at least 4 mm, most preferred at least 5 mm. The effective passage area of all the slots is advantageously equal to the effective passage area of the fume extracting passageway.

These and other objects of the invention will become more apparent from the following detailed description of an exemplary embodiment of a welding torch system and welding torch according to the invention taken in conjunction with the accompanying drawings.

In the drawings:
Figure 1 illustrates schematically an exemplary embodiment of a welding torch system for use in welding or cutting operations according to the invention;

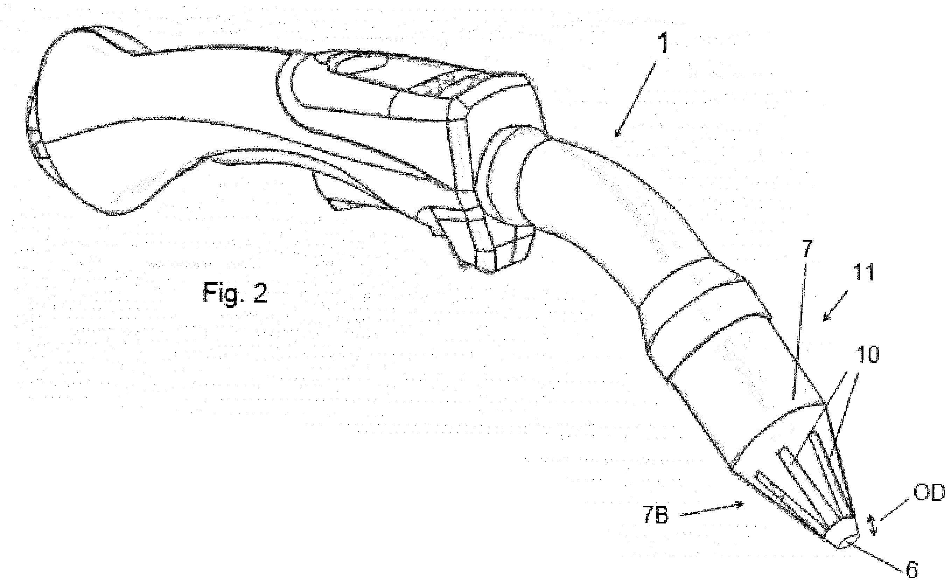

Figure 2 schematically illustrates a welding torch according to the invention in perspective;
Figure 3 schematically illustrates the welding torch of Figure 2 in cross section;
Figure 4 schematically illustrates the nozzle of the welding torch of Figures 2 and 3 in perspective;
Figure 5 schematically illustrates the nozzle of Figure 4 partly broken away;
Figure 6 schematically illustrates the nozzle of Figures 4 and 5 in side view;
Figure 7 schematically illustrates the nozzle of Figure 6 in cross section; and
Figure 8 schematically shows the nozzle with contact tip holder partly in cross section of the welding torch shown in Fig. 3.

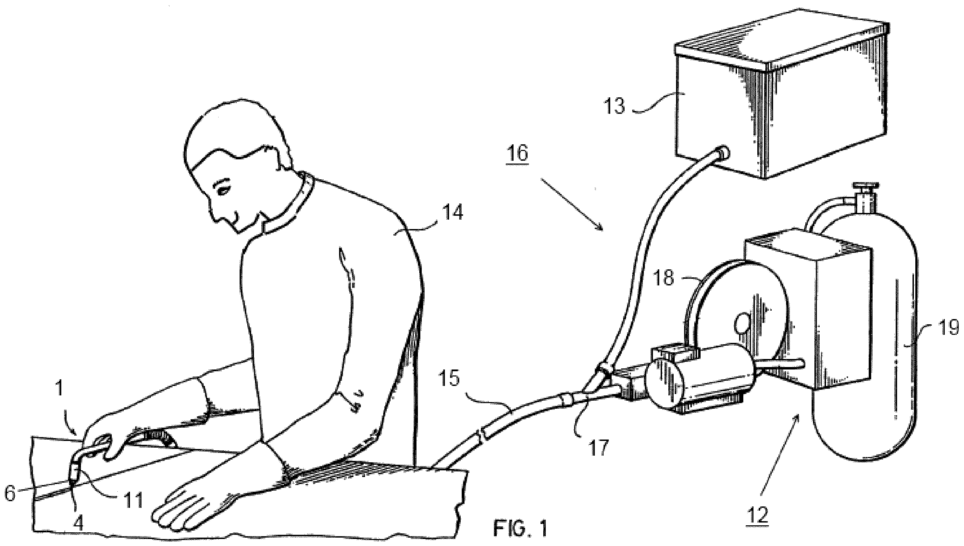

Referring to the drawings, Figure 1 illustrates schematically an exemplary embodiment of a welding torch system for use in welding or cutting operations. The system comprises a welding torch 1 including a nozzle 11 and a shield gas outlet 6, a control handle portion gripped by a welder 14 during operation, a flexible connector hose portion 15 which leads from the welding torch 1 to a services supply station 16. The flexible connector hose 15 terminates in an adaptor 17 which communicates with a fume extracting assembly 13, e.g. comprising a vacuum pump. The vacuum pump applies a vacuum to the interior of the hose 15 to remove fumes and smoke from adjacent the weld site at the nozzle 11 of the welding torch 1, and is arranged for - during operation - generating a flow of about 55 m³/h, or in general of between 10 and 100 m³/h, preferably between 50 and 75 m³/h.

The service supply station 16 further comprises a consumable welding wire feeding mechanism 18 which includes a reel of welding wire 4, and a shield gas generator and supply unit 12 with a source of shield or inert gas 19 for providing shield gas at the welding tip.

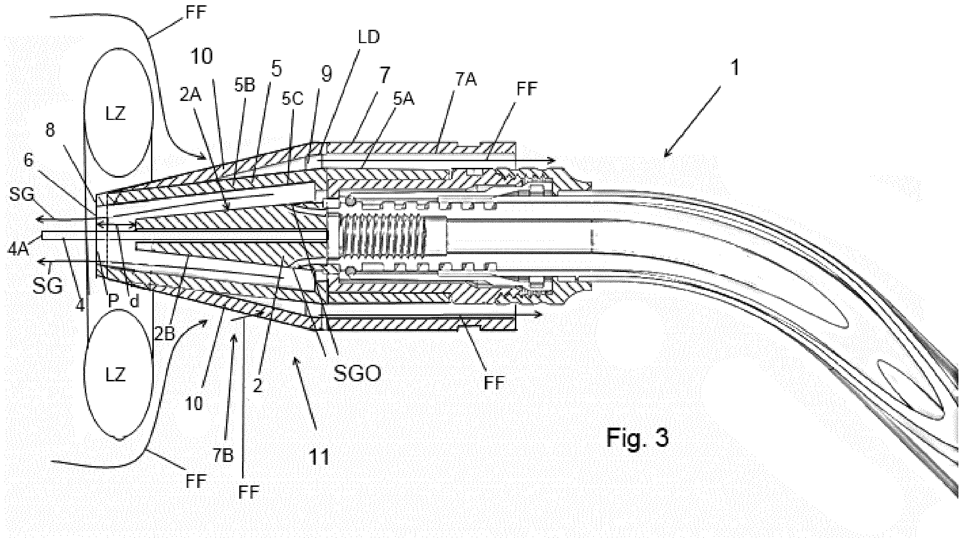

The welding torch 1 comprises a contact tip holder 2 having formed therein a longitudinal passageway 3 with a head end 3A through which can be supplied the welding wire 4 which has a free end 4A forming a contact tip for welding or cutting (Figure 3). The coaxial nozzle 11 comprises an inner shield gas conduit 5 which has a shield gas outlet 6 for supplying a shield gas SG coming from the shield gas generator and supply unit 12 via contact tip holder shield gas outlets SGO in the contact tip holder 2. The inner shield gas conduit 5 surrounds the contact tip holder 2.

An outer shell 7 at least partly surrounds the inner shield gas conduit 5 and has a head end 8. As can be seen in Figure 3 between an inner surface 7A of the outer shell 7 and an outer surface 5A of the inner shield gas conduit 5 a fume extracting passageway 9 is formed which via the hose 15 (Figure 1) is connected to the fume extracting assembly 13. A plurality of openings 10 is provided in a distal end 7B of the outer shell for extracting ambient air and fume FF into the coaxial nozzle 11.

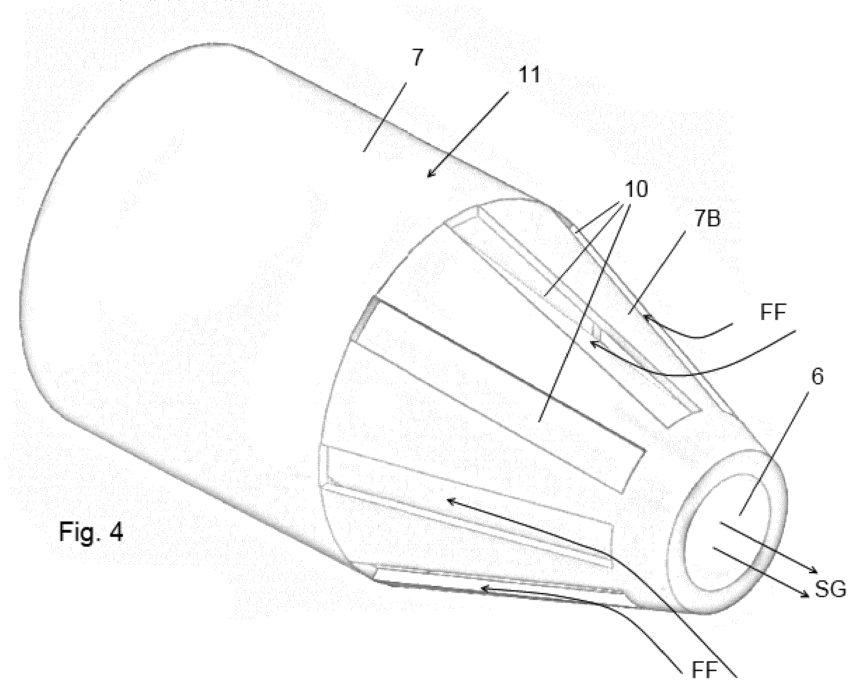

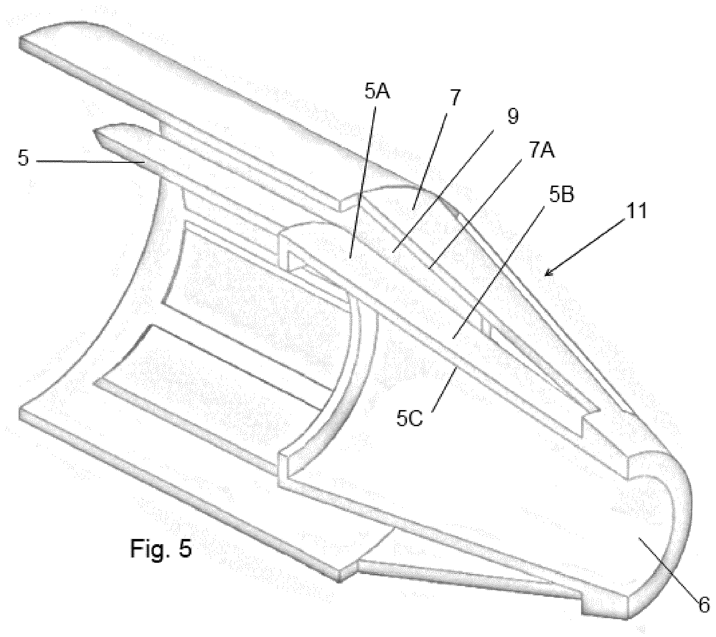

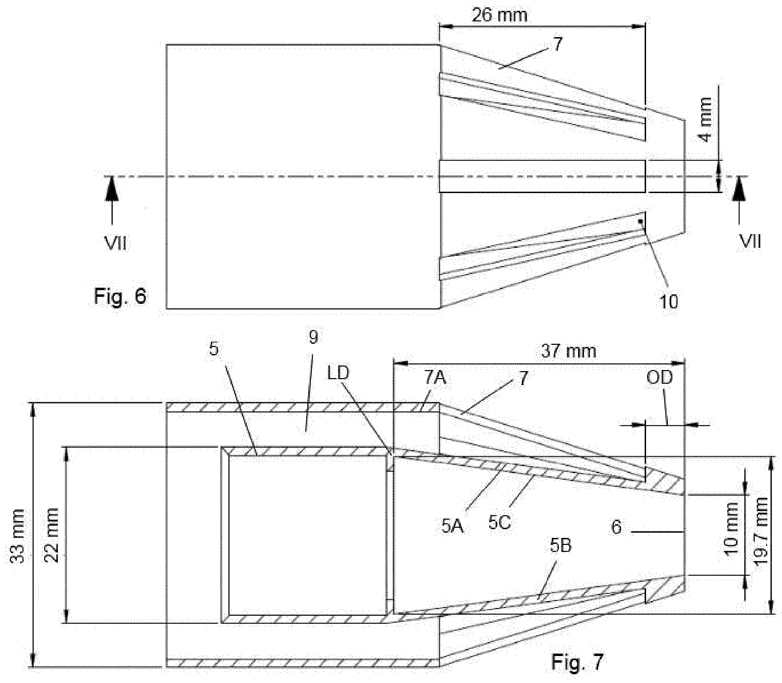

The inner shield gas conduit 5 has an end portion 5B having an inner surface 5C of which the diameter decreases towards the shield gas outlet 6, as can be clearly seen in any of the Figures 3 to 7. In the embodiment shown in Figure 7 the shield gas outlet 6 has a diameter of 10 mm, but in other embodiments the diameter can be between 8 and 12 mm, preferably a diameter of about 10 mm. The nozzle 11 is configured such that the distance between the outer surface 2B of the conical end portion 2A of the contact tip holder 2 and the inner surface 5C of the conical end portion 5B of the inner shield gas conduit 5 is at least substantially uniform in longitudinal direction, which can lead to an undisturbed flow of shield gas towards and through the shield gas outlet 6.

The distance d in longitudinal direction between the head end 3A of the contact tip holder 2 and a plane P defined by the shield gas outlet 6 of the inner shield gas conduit 5 is in the embodiment shown in Figure 3 about 3 mm, but can in other embodiments be less than 5 mm, preferably less than 4 mm. In the embodiment shown in the Figures the welding torch 1 comprises eight longitudinally extending slots 10 which are distributed evenly in circumferential direction of the outer shell 7. Each slot 10 communicates with the fume extracting passageway 9, so that - during operation - a flow of fumes FF can be drawn into the slots 10 and transported to the fume extracting assembly 13.

With this configuration of the welding torch 1 and the dimensions shown in Figures 6 and 7 the welding torch supplies - during operation - shield gas through the shield gas outlet 6 at a velocity of about 3.5 m/s. Please note that in other not-shown embodiments the configuration and dimensions can be adapted to obtain a velocity of shield gas between about 1.5 m/s and 10 m/s, preferably between about 2.8 m/s and 5 m/sand most preferred between 3.0 and 3.8 m/s.

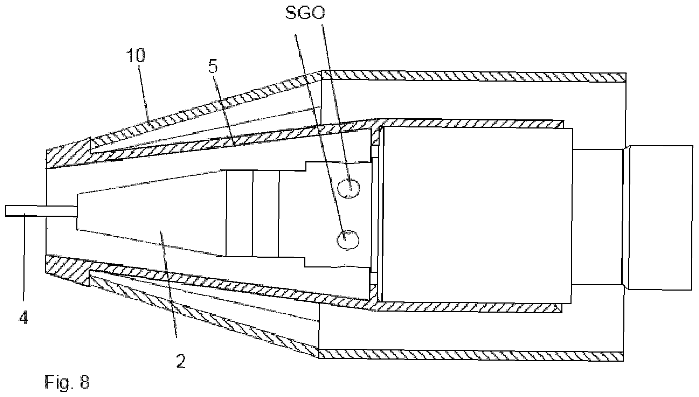

In the embodiment shown in Figures 6 and 7 each slot is rectangular and has a length (projected in longitudinal direction) of 26 mm and a width of 4 mm. The inner surface 7A of the distal end 7B of the outer shell 7 has a diameter which decreases towards the head end 8 of the distal end (7B) of the outer shell 7, so that the slots 10 extend from the portion LD of the outer shell 7 where the inner surface 7A has the largest diameter, in the shown embodiment 19.7 mm, to an operating distance OD from the distal end 7B of the head end 8 of the outer shell 7, which in the shown embodiment is about 5 mm. The length of the inner shield gas conduit 5 from the position LD where the inner diameter of the inner shield gas conduit 5 starts to decrease up to the head end is in the shown embodiment 37 mm. This ensures that a lee zone is developed adjacent and around the head end. Please note that in other embodiments the operating distance OD can be at least 3 mm. The contact tip holder is not shown in Figures 6 and 7 in order to make the drawing mare clear, however the contact tip holder mounted in the nozzle is shown in Fig. 3 and Fig. 8. The head end of the contact tip holder has - in this embodiment - a diameter of about 4.0 mm. The contact tip holder is conically shaped such that the distance in transverse direction between the outer surface of the tip holder and the inner surface of the inner shield gas conduit is substantially constant up to the tip end of the contact tip holder.

The end portion of the inner shield gas conduit has a uniform wall thickness of about 1.65 mm, which leads to an outer diameter of the inner shield gas conduit before the inner diameter starts to decrease of 22 mm. In the shown embodiment the outer shell has an outer diameter of 33 mm before the inner diameter thereof starts to decrease at a position 26 mm from the head end. The outer shell also has a uniform wall thickness of 1.65 mm. In order to prevent deterioration of the inner shield gas conduit due to the heat generated during welding, the wall thickness can in other embodiments be at least 1 mm, more preferred at least 1.5 mm.

The fume extracting assembly 13 is arranged for - during operation - generating a flow FF with such a value and the operating distance OD is chosen such that- during operation - the circumferential lee zone LZ is created and maintained around the distal end 7B of the outer shell 7 in which substantially no extraction force is exerted on fume. This lee zone LZ thus protects the weld site from the underpressure created by the fume extracting assembly 13.

## Claims

1. Welding torch system for use in welding or cutting operations during which fume is created, said welding torch system including a welding torch (1) comprising:
- a contact tip holder (2) having formed therein a longitudinal passageway (3) with a head end (3A) through which can be supplied welding wire (4) having a free end (4A) forming a contact tip;
- a coaxial nozzle (11) comprising an inner shield gas conduit (5) having a shield gas outlet (6) for supplying a shield gas, an outer shell (7) at least partly surrounding said inner shield gas conduit (5), said outer shell (7) having a head end (8), wherein between an inner surface (7A) of said outer shell (7) and an outer surface (5A) of said inner shield gas conduit (5) a fume extracting passageway (9) is formed and wherein an opening is provided in a distal end (7B) of the outer shell (7) for extracting ambient air and fume into the coaxial nozzle (11);
said welding torch system further comprising:
- a shield gas generator and supply unit (12) operatively connectable to the inner shield gas conduit (5) for - during operation - supplying shield gas through the shield gas outlet (6), wherein the welding torch system is arranged for - during operation - supplying shield gas through the shield gas outlet (6) at a velocity between about 1.5 m/s and 10 m/s; and
- a fume extracting assembly (13) operatively connectable to the fume extracting passageway (9) for - during operation - extracting fume and ambient air;
**characterized in that** the inner shield gas conduit (5) surrounds said contact tip holder (2), wherein the distance (d) in longitudinal direction between the head end (3A) of the contact tip holder (2) and a plane (P) defined by the shield gas outlet (6) of the inner shield gas conduit (5) is less than 5 mm, and wherein the outer shell (7) is provided with a number of longitudinally extending slots (10), each slot (10) communicating with the fume extracting passageway (9), which slots (10) are distributed evenly in circumferential direction of the outer shell (7).

2. Welding torch system according to claim 1, wherein the fume extracting assembly (13) is arranged for - during operation - generating a flow of between 10 and 100 m³/h, preferably between 50 and 75 m³/h, most preferred a flow of about 55 m³/h.

3. Welding torch system according to claim 1 or 2, wherein the inner surface (7A) of the distal end (7B) of the outer shell (7) has a diameter which decreases towards the head end (8) of the distal end (7B) of the outer shell (7) and wherein the slots (10) extend from the portion (LD) of the outer shell (7) where the inner surface (7A) has the largest diameter up to an operating distance (OD) from the distal end (7B) of the head end (8) of the outer shell (7).

4. Welding torch system according to claim 3, wherein the operating distance (OD) is at least 3 mm, preferably at least 4 mm, most preferred about 5 mm.

5. Welding torch system according to any one of the preceding claims, wherein the inner shield gas conduit (5) has an end portion (5B) having an inner surface (5C) of which the diameter decreases towards the shield gas outlet (6).

6. Welding torch system according to claim 5, wherein the inner surface (5C) of the end portion is configured for - during operation - generating a substantially undisturbed flow of shield gas (SG).

7. Welding torch system according to any one of the previous claims, wherein the shield gas outlet (6) has a diameter between 8 and 12 mm, preferably a diameter of about 10 mm.

8. Welding torch system according to any one of the preceding claims, wherein the contact tip holder (2) has a conical end portion (2A) having an outer surface (2B) with a diameter which decreases towards the head end (3A).

9. Welding torch system according to claims 5 and 8, wherein the distance between the outer surface (2B) of the conical end portion (2A) of the contact tip holder (2) and the inner surface (5C) of the conical end portion (5B) of the inner shield gas conduit (5) is at least substantially uniform in longitudinal direction.

10. Welding torch system according to any one of the preceding claims, wherein the distance (d) in longitudinal direction between the head end (3A) of the contact tip holder (2) and a plane (P) defined by the shield gas outlet (6) of the inner shield gas conduit (5) is less than 4 mm, preferably less than 3 mm.

11. Welding torch (1) for use in a welding torch system according to any one of the preceding claims, wherein the welding torch (1) comprises:
- a contact tip holder (2) having formed therein a longitudinal passageway (3) with a head end (3A) through which can be supplied welding wire (4) having a free end (4A) forming a contact tip;
- a coaxial nozzle (11) comprising an inner shield gas conduit (5) having a shield gas outlet (6) for supplying a shield gas, an outer shell (7) at least partly surrounding said inner shield gas conduit (5), said outer shell (7) having a head end (8), wherein between an inner surface (7A) of said outer shell (7) and an outer surface (5A) of said inner shield gas conduit (5) a fume extracting passageway (9) is formed and wherein an opening is provided in a distal end (7B) of the outer shell (7) for extracting ambient air and fume into the coaxial nozzle (11);
**characterized in that** said inner shield gas conduit (5) surrounds said contact tip holder (2), wherein the distance (d) in longitudinal direction between the head end (3A) of the contact tip holder (2) and a plane (P) defined by the shield gas outlet (6) of the inner shield gas conduit (5) is less than 5 mm, **in that** the outer shell (7) is provided with a number of longitudinally extending slots (10), each slot (10) communicating with the fume extracting passageway (9), which slots (10) are distributed evenly in circumferential direction of the outer shell (7) and **in that** the inner shield gas conduit (5) has an end portion (5B) having an inner surface (5C) of which the diameter decreases towards the shield gas outlet (6).

12. Welding torch according to claim 11, wherein the inner surface (7A) of the distal end (7B) of the outer shell (7) has a diameter which decreases towards the head end (8) of the distal end (7B) of the outer shell (7) and wherein the slots (10) extend from the portion (LD) of the outer shell (7) where the inner surface (7A) has the largest diameter up to an operating distance (OD) from the distal end (7B) of the head end (8) of the outer shell (7).

13. Welding torch according to claim 12, wherein the operating distance (OD) is at least 3 mm, preferably at least 4 mm, most preferred at least 5 mm.

14. Welding torch (1) according to any one of the claims 11 to 13, wherein the shield gas outlet (6) has a diameter between 8 and 12 mm, preferably a diameter of about 10 mm.

15. Welding torch according to any one of the claims 11 to 14, wherein the contact tip holder (2) has a conical end portion (2A) having an outer surface (2B) with a diameter which decreases towards the head end (3A).

16. Welding torch according to claim 15, wherein the distance between the outer surface (2B) of the conical end portion (2A) of the contact tip holder (2) and the inner surface (5C) of the conical end portion (5B) of the inner shield gas conduit (5) is at least substantially uniform in longitudinal direction.

17. Welding torch according to any one of the claims 11 to 16, wherein the distance (d) in longitudinal direction between the head end (3A) of the contact tip holder (2) and a plane (P) defined by the shield gas outlet (6) of the inner shield gas conduit (5) is less than 4 mm, preferably less than 3 mm.

## Patentansprüche

1. Schweißbrennersystem zur Verwendung bei Schweiß- oder Schneidoperationen, bei denen Rauch erzeugt wird, wobei das Schweißbrennersystem einschließlich eines Schweißbrenners (1) Folgendes umfasst:
- einen Kontaktspitzenhalter (2), in dem ein längsgerichteter Durchgang (3) mit einem Kopfende (3A) ausgebildet ist, durch den ein Schweißdraht (4) zugeführt werden kann, der ein freies Ende (4A) aufweist, das eine Kontaktspitze ausbildet;
- eine koaxiale Düse (11), die Folgendes umfasst: einen inneren Schutzgaskanal (5) mit einem Schutzgasausgang (6) zur Zufuhr eines Schutzgases, eine äußere Hülle (7), die zumindest teilweise den inneren Schutzgaskanal (5) umschließt, wobei die äußere Hülle (7) ein Kopfende (8) aufweist, worin zwischen einer inneren Oberfläche (7A) der äußeren Hülle (7) und einer äußeren Oberfläche (5A) des inneren Schutzgaskanals (5) ein Rauch extrahierender Durchgang (9) ausgebildet ist und worin eine Öffnung an einem entfernten Ende (7B) der äußeren Hülle (7) zum Extrahieren der Umgebungsluft und des Rauchs in die koaxiale Düse (11) vorgesehen ist;
wobei das Schweißbrennersystem ferner Folgendes umfasst:
- eine Schutzgasgenerator- und Zuführeinheit (12), die funktionell mit dem inneren Schutzgaskanal (5) verbunden werden kann, um - während des Betriebs - Schutzgas durch den Schutzgasausgang (6) zuzuführen, wobei das Schweißbrennersystem - während des Betriebs - so ausgelegt ist, dass Schutzgas durch den Schutzgasausgang (6) mit einer Geschwindigkeit zwischen rund 1,5 m/s und 10 m/s zugeführt wird; und
- eine Rauch extrahierende Baugruppe (13), die funktionell mit dem Rauch extrahierenden Durchgang (9) verbunden werden kann, um - während des Betriebs - Rauch und Umgebungsluft zu extrahieren;
**dadurch gekennzeichnet, dass** der innere Schutzgaskanal (5) den Kontaktspitzenhalter (2) umschließt, wobei der Abstand (d) in Längsrichtung zwischen dem Kopfende (3A) des Kontaktspitzenhalters (2) und einer Ebene (P), die durch den Schutzgasausgang (6) des inneren Schutzgaskanals (5) definiert wird, weniger als 5 mm beträgt, und wobei die äußere Hülle (7) mit einer Reihe sich in Längsrichtung erstreckender Schlitze (10) vorgesehen ist, wobei jeder Schlitz (10) mit dem Rauch extrahierenden Durchgang (9) verbunden ist und die Schlitze (10) in Umfangsrichtung der äußeren Hülle (7) gleichmäßig verteilt sind.

2. Schweißbrennersystem nach Anspruch 1, wobei die Rauch extrahierende Baugruppe (13) so ausgelegt ist, dass sie - während des Betriebs - eine Strömung zwischen 10 und 100 m³/h generiert, vorzugsweise zwischen 50 und 75 m³/h, am besten eine Strömung von rund 55 m³/h.

3. Schweißbrennersystem nach Anspruch 1 oder 2, wobei die innere Oberfläche (7A) des entfernten Endes (7B) der äußeren Hülle (7) einen Durchmesser aufweist, der in Richtung des Kopfendes (8) des entfernten Endes (7B) der äußeren Hülle (7) abnimmt und wobei sich die Schlitze (10) von dem Abschnitt (LD) der äußeren Hülle (7), an dem die innere Oberfläche (7A) den größten Durchmesser aufweist, bis zu einem funktionellen Abstand (OD) vom entfernten Ende (7B) des Kopfendes (8) der äußeren Hülle (7) erstrecken.

4. Schweißbrennersystem nach Anspruch 3, wobei der funktionelle Abstand (OD) mindestens 3 mm beträgt, vorzugsweise mindestens 4 mm, am besten rund 5 mm.

5. Schweißbrennersystem nach einem der vorhergehenden Ansprüche, wobei der innere Schutzgaskanal (5) einen Endabschnitt (5B) mit einer inneren Oberfläche (5C) aufweist, deren Durchmesser in Richtung des Schutzgasausgangs (6) abnimmt.

6. Schweißbrennersystem nach Anspruch 5, wobei die innere Oberfläche (5C) des Endabschnitt so angeordnet ist, dass sie - während des Betriebs - eine im Wesentlichen ungestörte Strömung des Schutzgases (SG) generiert.

7. Schweißbrennersystem nach einem der vorhergehenden Ansprüche, wobei der Schutzgasausgang (6) einen Durchmesser zwischen 8 und 12 mm hat, vorzugsweise einen Durchmesser von rund 10 mm.

8. Schweißbrennersystem nach einem der vorhergehenden Ansprüche, wobei der Kontaktspitzenhalter (2) einen konischen Endabschnitt (2A) mit einer äußeren Oberfläche (2B) aufweist, der einen Durchmesser hat, der in Richtung des Kopfendes (3A) abnimmt.

9. Schweißbrennersystem nach Anspruch 5 und 8, wobei der Abstand zwischen der äußeren Oberfläche (2B) des konischen Endabschnitts (2A) des Kontaktspitzenhalters (2) und der inneren Oberfläche (5C) des konischen Endabschnitts (5B) des inneren Schutzgaskanals (5) in Längsrichtung mindestens im Wesentlichen konstant ist.

10. Schweißbrennersystem nach einem der vorhergehenden Ansprüche, wobei der Abstand (d) in Längsrichtung zwischen dem Kopfende (3A) des Kontaktspitzenhalters (2) und einer Ebene (P), die durch den Schutzgasausgang (6) des inneren Schutzgaskanals (5) definiert wird, weniger als 4 mm beträgt, vorzugsweise weniger als 3 mm.

11. Schweißbrenner (1) zur Verwendung in einem Schweißbrennersystem nach einem der vorhergehenden Ansprüche, wobei der Schweißbrenner (1) Folgendes umfasst:
- einen Kontaktspitzenhalter (2), in dem ein längsgerichteter Durchgang (3) mit einem Kopfende (3A) ausgebildet ist, durch den ein Schweißdraht (4) zugeführt werden kann, der ein freies Ende (4A) aufweist, das eine Kontaktspitze ausbildet;
- eine koaxiale Düse (11), die Folgendes umfasst: einen inneren Schutzgaskanal (5) mit einem Schutzgasausgang (6) zur Zufuhr eines Schutzgases, eine äußere Hülle (7), die zumindest teilweise den inneren Schutzgaskanal (5) umschließt, wobei die äußere Hülle (7) ein Kopfende (8) aufweist, worin zwischen einer inneren Oberfläche (7A) der äußeren Hülle (7) und einer äußeren Oberfläche (5A) des inneren Schutzgaskanals (5) ein Rauch extrahierender Durchgang (9) ausgebildet ist und worin eine Öffnung an einem entfernten Ende (7B) der äußeren Hülle (7) zum Extrahieren der Umgebungsluft und des Rauchs in die koaxiale Düse (11) vorgesehen ist;
**dadurch gekennzeichnet, dass** der innere Schutzgaskanal (5) den Kontaktspitzenhalter (2) umschließt, wobei der Abstand (d) in Längsrichtung zwischen dem Kopfende (3A) des Kontaktspitzenhalters (2) und einer Ebene (P), die durch den Schutzgasausgang (6) des inneren Schutzgaskanals (5) definiert wird, weniger als 5 mm beträgt, dass die äußere Hülle (7) mit einer Reihe sich in Längsrichtung erstreckender Schlitze (10) vorgesehen ist, wobei jeder Schlitz (10) mit dem Rauch extrahierenden Durchgang (9) verbunden ist und die Schlitze (10) in Umfangsrichtung der äußeren Hülle (7) gleichmäßig verteilt sind und dass der innere Schutzgaskanal (5) einen Endabschnitt (5B) mit einer inneren Oberfläche (5C) aufweist, deren Durchmesser in Richtung des Schutzgasausgangs (6) abnimmt.

12. Schweißbrenner nach Anspruch 11, wobei die innere Oberfläche (7A) des entfernten Endes (7B) der äußeren Hülle (7) einen Durchmesser aufweist, der in Richtung des Kopfendes (8) des entfernten Endes (7B) der äußeren Hülle (7) abnimmt, und in der sich die Schlitze (10) von dem Abschnitt (LD) der äußeren Hülle (7), an dem die innere Oberfläche (7A) den größten Durchmesser aufweist, bis zu einem funktionellen Abstand (OD) vom entfernten Ende (7B) des Kopfendes (8) der äußeren Hülle (7) erstrecken.

13. Schweißbrenner nach Anspruch 12, wobei der funktionelle Abstand (OD) mindestens 3 mm beträgt, vorzugsweise mindestens 4 mm, am besten mindestens 5 mm.

14. Schweißbrenner (1) nach einem der Ansprüche 11 bis 13, wobei der Schutzgasausgang (6) einen Durchmesser zwischen 8 und 12 mm aufweist, vorzugsweise einen Durchmesser von rund 10 mm.

15. Schweißbrenner nach einem der Ansprüche 11 bis 14, wobei der Kontaktspitzenhalter (2) einen konischen Endabschnitt (2A) mit einer äußeren Oberfläche (2B) aufweist, der einen Durchmesser hat, der in Richtung des Kopfendes (3A) abnimmt.

16. Schweißbrenner nach Anspruch 15, wobei der Abstand zwischen der äußeren Oberfläche (2B) des konischen Endabschnitts (2A) des Kontaktspitzenhalters (2) und der inneren Oberfläche (5C) des konischen Endabschnitts (5B) des inneren Schutzgaskanals (5) in Längsrichtung mindestens im Wesentlichen konstant ist.

17. Schweißbrenner nach einem der Ansprüche 11 bis 16, wobei der Abstand (d) in Längsrichtung zwischen dem Kopfende (3A) des Kontaktspitzenhalters (2) und einer Ebene (P), die durch den Schutzgasausgang (6) des inneren Schutzgaskanals (5) definiert wird, weniger als 4 mm beträgt, vorzugsweise weniger als 3 mm.

## Revendications

1. Système de chalumeau de soudage destiné à être utilisé dans des opérations de soudage ou de découpage au cours desquelles de la fumée est créée, ledit système de chalumeau de soudage comprenant un chalumeau de soudage (1) comprenant :
- un support de pointe de contact (2) ayant, formé à l'intérieur de celui-ci, un passage longitudinal (3) avec une extrémité de tête (3A) à travers laquelle peut être alimenté un fil à souder (4) ayant une extrémité libre (4A) formant une pointe de contact ;
- une buse coaxiale (11) comprenant un conduit de gaz de protection interne (5) ayant une sortie de gaz de protection (6) pour alimenter un gaz de protection, une enveloppe externe (7) entourant au moins partiellement ledit conduit de gaz de protection interne (5), ladite enveloppe externe (7) ayant une extrémité de tête (8), dans lequel un passage d'extraction de fumée (9) est formé entre une surface interne (7A) de ladite enveloppe externe (7) et une surface externe (5A) dudit conduit de gaz de protection interne (5), et dans lequel une ouverture est prévue dans une extrémité distale (7B) de l'enveloppe externe (7) pour extraire de l'air ambiant et des fumées dans la buse coaxiale (11) ;
ledit système de chalumeau de soudage comprenant en outre :
- un générateur de gaz de protection et une unité d'alimentation (12) pouvant être reliée de manière opérationnelle au conduit de gaz de protection interne (5) pour - en cours de fonctionnement - alimenter un gaz de protection à travers la sortie du gaz de protection (6), dans lequel le système de chalumeau de soudage est agencé pour - en cours de fonctionnement - alimenter un gaz de protection à travers la sortie de gaz de protection (6) à une vitesse comprise entre environ 1,5 m/s et 10 m/s ; et
- un ensemble d'extraction de fumée (13) pouvant être connecté de manière opérationnelle au passage d'extraction de fumée (9) pour - en cours de fonctionnement - extraire la fumée et l'air ambiant ;
**caractérisé en ce que** le conduit de gaz de protection interne (5) entoure ledit support de pointe de contact (2), dans lequel la distance (d) dans la direction longitudinale entre l'extrémité de tête (3A) du support de pointe de contact (2) et un plan (P) défini par la sortie de gaz de protection (6) du conduit de gaz de protection interne (5) est inférieur à 5 mm, et dans lequel l'enveloppe externe (7) est munie d'un certain nombre de fentes s'étendant longitudinalement (10), chaque fente (10) communiquant avec le passage d'extraction de fumée (9), lesquelles fentes (10) sont réparties uniformément dans la direction circonférentielle de l'enveloppe externe (7).

2. Système de chalumeau de soudage selon la revendication 1, dans lequel l'ensemble d'extraction de fumée (13) est agencé pour - en cours de fonctionnement - générer un écoulement compris entre 10 et 100 m³/h, de manière préférée entre 50 et 75 m³/h, de la manière la plus préférée un écoulement d'environ 55 m³/h.

3. Système de chalumeau de soudage selon la revendication 1 ou 2, dans lequel la surface interne (7A) de l'extrémité distale (7B) de l'enveloppe externe (7) a un diamètre qui diminue vers l'extrémité de tête (8) de l'extrémité distale (7B) de l'enveloppe externe (7) et dans lequel les fentes (10) s'étendent à partir de la partie (LD) de l'enveloppe externe (7) où la surface interne (7A) a le plus grand diamètre jusqu'à une distance de fonctionnement (OD) à partir de l'extrémité distale (7B) de l'extrémité de tête (8) de l'enveloppe externe (7).

4. Système de chalumeau de soudage selon la revendication 3, dans lequel la distance de fonctionnement (OD) est d'au moins 3 mm, de manière préférée d'au moins 4 mm, de la manière la plus préférée d'environ 5 mm.

5. Système de chalumeau de soudage selon l'une quelconque des revendications précédentes, dans lequel le conduit de gaz de protection interne (5) a une partie d'extrémité (5B) ayant une surface interne (5C) dont le diamètre diminue vers la sortie de gaz de protection (6).

6. Système de chalumeau de soudage selon la revendication 5, dans lequel la surface interne (5C) de la partie d'extrémité est configurée pour - en cours de fonctionnement - générer un écoulement de gaz de protection (SG) sensiblement non perturbé.

7. Système de chalumeau de soudage selon l'une quelconque des revendications précédentes, dans lequel la sortie de gaz de protection (6) a un diamètre compris entre 8 et 12 mm, de manière préférée un diamètre d'environ 10 mm.

8. Système de chalumeau de soudage selon l'une quelconque des revendications précédentes, dans lequel le support de pointe de contact (2) a une partie d'extrémité conique (2A) ayant une surface externe (2B) avec un diamètre qui diminue vers l'extrémité de tête (3A).

9. Système de chalumeau de soudage selon les revendications 5 et 8, dans lequel la distance entre la surface externe (2B) de la partie d'extrémité conique (2A) du support de pointe de contact (2) et la surface interne (5C) de la partie d'extrémité conique (5B) du conduit de gaz de protection interne (5) est au moins sensiblement uniforme dans une direction longitudinale.

10. Système de chalumeau de soudage selon l'une quelconque des revendications précédentes, dans lequel la distance (d) dans la direction longitudinale entre l'extrémité de tête (3A) du support de pointe de contact (2) et un plan (P) défini par la sortie de gaz de protection (6) du conduit de gaz de protection interne (5) est inférieure à 4 mm, de manière préférée inférieure à 3 mm.

11. Chalumeau de soudage (1) destiné à être utilisé dans un système de chalumeau de soudage selon l'une quelconque des revendications précédentes, dans lequel le chalumeau de soudage (1) comprend :
- un support de pointe de contact (2) ayant, formé à l'intérieur de celui-ci, un passage longitudinal (3) avec une extrémité de tête (3A) à travers laquelle peut être alimenté un fil à souder (4) ayant une extrémité libre (4A) formant une pointe de contact ;
- une buse coaxiale (11) comprenant un conduit de gaz de protection interne (5) ayant une sortie de gaz de protection (6) pour alimenter un gaz de protection, une enveloppe externe (7) entourant au moins partiellement ledit conduit de gaz de protection interne (5), ladite enveloppe externe (7) ayant une extrémité de tête (8), dans lequel un passage d'extraction de fumée (9) est formé entre une surface interne (7A) de ladite enveloppe externe (7) et une surface externe (5A) dudit conduit de gaz de protection interne (5), et dans lequel une ouverture est prévue dans une extrémité distale (7B) de l'enveloppe externe (7) pour extraire de l'air ambiant et des fumées dans la buse coaxiale (11) ;
**caractérisé en ce que** le conduit de gaz de protection interne (5) entoure ledit support de pointe de contact (2), dans lequel la distance (d) dans la direction longitudinale entre l'extrémité de tête (3A) du support de pointe de contact (2) et un plan (P) défini par la sortie de gaz de protection (6) du conduit de gaz de protection interne (5) est inférieure à 5 mm, **en ce que** l'enveloppe externe (7) est munie d'un certain nombre de fentes s'étendant longitudinalement (10), chaque fente (10) communiquant avec le passage d'extraction de fumée (9), lesquelles fentes (10) sont réparties uniformément dans la direction circonférentielle de l'enveloppe externe (7), et **en ce que** le conduit de gaz de protection interne (5) a une partie d'extrémité (5B) ayant une surface interne (5C) dont le diamètre diminue vers la sortie de gaz de protection (6).

12. Chalumeau de soudage selon la revendication 11, dans lequel la surface interne (7A) de l'extrémité distale (7B) de l'enveloppe externe (7) a un diamètre qui diminue vers l'extrémité de tête (8) de l'extrémité distale (7B) de l'enveloppe externe (7) et dans lequel les fentes (10) s'étendent à partir de la partie (LD) de l'enveloppe externe (7) où la surface interne (7A) a le plus grand diamètre jusqu'à une distance de fonctionnement (OD) à partir de l'extrémité distale (7B) de l'extrémité de tête (8) de l'enveloppe externe (7).

13. Chalumeau de soudage selon la revendication 12, dans lequel la distance de fonctionnement (OD) est d'au moins 3 mm, de manière préférée d'au moins 4 mm, de la manière la plus préférée d'au moins 5 mm.

14. Chalumeau de soudage (1) selon l'une quelconque des revendications 11 à 13, dans lequel la sortie de gaz de protection (6) a un diamètre compris entre 8 et 12 mm, de manière préférée un diamètre d'environ 10 mm.

15. Chalumeau de soudage selon l'une quelconque des revendications 11 à 14, dans lequel le support de pointe de contact (2) a une partie d'extrémité conique (2A) ayant une surface externe (2B) avec un diamètre qui diminue vers l'extrémité de tête (3A).

16. Chalumeau de soudage selon la revendication 15, dans lequel la distance entre la surface externe (2B) de la partie d'extrémité conique (2A) du support de pointe de contact (2) et la surface interne (5C) de la partie d'extrémité conique (5B) du conduit de gaz de protection interne (5) est au moins sensiblement uniforme dans la direction longitudinale.

17. Chalumeau de soudage selon l'une quelconque des revendications 11 à 16, dans laquelle la distance (d) dans la direction longitudinale entre l'extrémité de tête (3A) du support de pointe de contact (2) et un plan (P) défini par la sortie de gaz de protection (6) du conduit de gaz de protection interne (5) est inférieure à 4 mm, de manière préférée inférieure à 3 mm.
